# EUROPEAN PATENT APPLICATION

(11) **EP 2 117 214 A1**
(43) Date of publication of application: **11.11.2009**
(21) Application number: 08159002.8
(22) Date of filing: 25.06.2008
(51) Int. Cl.: H04M 3/428, H04L 29/08

(54) **Processing data on a plurality of communication devices**

(30) Priority: 09.05.2008 US 151776
(71) Applicant: Mitel Networks Corporation, Ottawa, ON K2K 2W7 (CA)
(72) Inventor: Nason, Christopher James, Kanata Ontario K2T 1G2 (CA); Star, Robert, Kanata Ontario K2W 1B4 (CA); Provencal, Paul, Gatineau Québec J0A 2Y5 (CA); Blatherwick, Peter, Ottawa Ontario K1Y 2B6 (CA)
(74) Representative: Derry, Paul Stefan

(57) **Abstract**

A method, apparatus and system for processing data (F1) on a plurality of communication devices (140a...140g) is provided. Data is received at a master communication device (110) via a master communication network (125). The data is distributed to a plurality of communication devices in communication with the master communication device. Processing of the data at, at least a subset of the plurality of communication devices is triggered. Distribution of the data may occur via a cascade process wherein the data is first distributed to communication devices which are designated as masters (140d), and the data is further distributed to the remaining communication devices (140e,140f) via the masters.

## Description

The specification relates generally to communication systems, in particular, to a method and system for processing data on a plurality of communication devices.

Among the many advantages of packet-based voice and other media systems is the capability for the statistical multiplexing of bandwidth. Because of this, VoIP and packet media systems can function with significantly less bandwidth that with previous TDM (time division multiplex) digital systems. This provides an economy of cost that is a main driver in the market acceptance of this technology.

However, there are a number of useful features and services in which unacceptably large amounts of bandwidth are consumed. These range from the convenience of providing background music to individual terminals, to the essentiality of providing emergency pages and announcements. In the past, these types of systems were economically scaled to provide for absolutely non-blocking switching and internal trunking. Thus mass bandwidth features were not an issue. However packet-based systems derive much of their advantage from the use of statistical multiplexing of limited bandwidth LANs and especially WAN access links among multiple users and applications. Hence, there is a severe tension between the economies achieved by statistical multiplexing and the utility of these mass bandwidth features. This is a widely recognized deficiency of packet-based voice systems.

The well-known IP multicast system has been used to address this issue. Each device, to which the media stream is to be directed, is instructed to listen on one of a number of available multicast addresses. Multiple devices can then share a common RTP stream and share thereby the same portion of bandwidth. Thus the cost reduction of statistical multiplexing is maintained.

However, IP multicast forwarding is not a standard router capability and is not deployed as a standard feature in most VoIP and other media networks. To utilize the multicast solution, more complex and costly routers would need to be purchased, thus diminishing the important cost advantage that is a major justification for VoIP. Multiple multicast streams would have to be directed across the core of the network to the routers serving each subnet. Multicast will conserve bandwidth in the core of the network in comparison to a naive unicast system. However significant bandwidth will still be consumed.

Another solution is to restrict the number of device on which a feature, for example background music, could be active at any one time. While this reduces bandwidth, it also reduces the customer benefit for features, and hence the customer benefit of a packet-based system as opposed to its TDM alternative. For some features such as mass emergency paging such a solution would be unacceptable.

A first aspect of the specification provides a method of processing data on a plurality of communication devices. The method comprises receiving data at a master communication device via a master communication network. The method further comprises distributing the data to a plurality of communication devices in communication with the master communication device. The method further comprises triggering processing of the data at, at least a subset of the plurality of communication devices. The plurality of communication devices may be in communication with the master communication device via a second communication network. Distributing the data to a plurality of communication devices in communication with the master communication device may comprise transmitting the data to a portion of the plurality of communication devices which are designated as masters, distributing the data to the remaining communication devices occurring via the masters. The method may further comprise triggering storing said data at said plurality of communication devices.

The data may comprise multimedia data, and triggering processing of the data at, at least a subset of the plurality of communication devices may comprise triggering playing of the multimedia data at, at least a subset of the plurality of communication devices. The method may further comprise converting the multi-media data to a format playable by the plurality of communication devices prior to distributing the multi-media data. The multi-media data may comprise voice data broadcast by a public announcement system, and the method may further comprise recording the voice data prior to converting the multi-media data to a format playable by the plurality of communication devices. The multi-media data may comprise streaming data, and the method may further comprise capturing the streaming data prior to converting the multi-media data to a format playable by the plurality of communication devices. Each of the plurality of communication devices may be enabled to store and delete multi-media data files

Triggering playing of the multi-media data at the at least a subset of the plurality of communication devices may occur via distributing the multi-media data to a plurality of communication devices. Playing of the multi-media data at the at least a subset of the plurality of communication devices may occur upon receipt of the multi-media data at the plurality of communication devices.

Triggering playing of the multi-media data at the at least a subset of the plurality of communication devices may comprise triggering changing of the default behavior of the subset of the plurality of communication devices by updating the configuration of the at least a subset of the plurality of communication devices

A plurality of multi-media data may be stored at the plurality of communication devices, and triggering playing of the multi-media data may comprise transmitting a signal comprising an identifier of the multi-media data to the at least a subset of the plurality of communication devices.

The multi-media data may comprise at least one of an announcement, a page, and background music. The multi-media data may comprise an announcement and a map. The multi-media data may comprise at least one of an audio file and a video file in a format playable by the plurality of communication devices.

A second aspect of the specification provides a master communication device comprising: a communications interface enabled for receiving data via a master communication network; and a processing unit enabled for: distributing the data to a plurality of communication devices in communication with the master communication device; and triggering processing of the data at, at least a subset of the plurality of communication devices.

A third aspect of the specification provides a method of playing multi-media data on a plurality of communication devices. The method comprises providing the plurality of communication devices, each of which has been provisioned with at least one multi-media data file, the plurality of communication devices in local communication with a central communication device, the central communication device in remote communication with an attendant device. The method further comprises, at the central communication device: receiving a trigger to play the at least one multi-media data file from the attendant device; and in response, transmitting a trigger to the plurality of communication devices to play the at least one multi-media data file.

Embodiments are described with reference to the following figures, in which:
Figure 1 is a schematic view of an exemplary PBX network, according to a non-limiting embodiment;
Figure 2 is a schematic view showing communication among phones within the PBX network of Figure 1 for establishing a distributed TFTP network, according to a non-limiting embodiment;
Figure 3 is a timing diagram showing operation of the distributed TFTP network of Figure 2, according to a non-limiting embodiment;
Figure 4 depicts a system for processing data on a plurality of communication devices, according to a non-limiting embodiment;
Figure 5 depicts a communication device, according to a non-limiting embodiment;
Figure 6 depicts an attendant device, according to a non-limiting embodiment;
Figure 7 depicts a method for processing data on a plurality of communication devices, according to a non-limiting embodiment;
Figure 8 depicts a system for processing data on a plurality of communication devices, according to a non-limiting embodiment;
Figure 9 depicts a system for processing data on a plurality of communication devices, according to a non-limiting embodiment; and
Figure 10 depicts a system for processing data on a plurality of communication devices, according to a non-limiting embodiment.

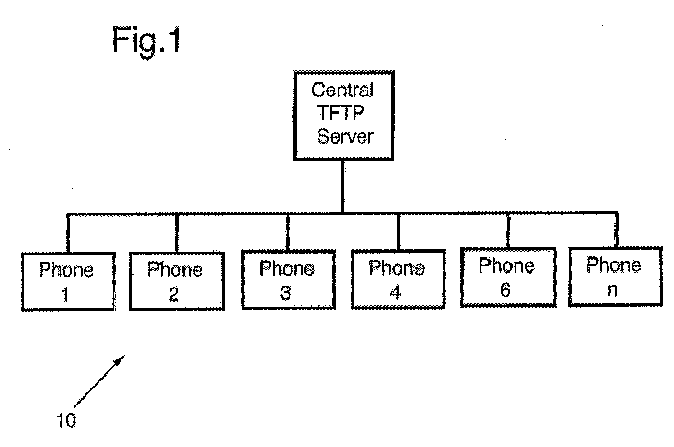

Referring to Figure 1, a schematic overview of a PBX network 10 is generally shown. The network 10 includes a central TFTP (trivial file transfer protocol) server and a plurality of IP phones. The phones are linked to the central TFTP server via a local area network (LAN) in a manner that is well known in the art.
The phones may alternatively be linked to the TFTP server via a wireless connection or any medium that supports a TCP/IP network.

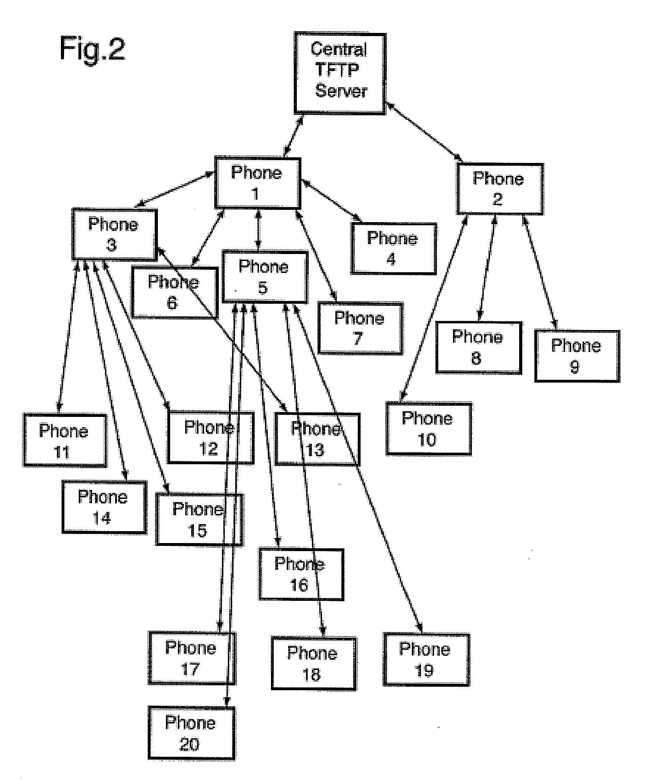

Each phone contains a TFTP client that has the ability to transform itself into a TFTP server. As such, a phone may download software from the central TFTP server or, alternatively, may download software from another phone that has transformed itself into a TFTP server. An example of a distributed TFTP method is shown in Figure 2 in which phones 1, 2, 3 and 5 have transformed into TFTP servers in order to service other phones. Once a phone has downloaded the software from the central TFTP server or another phone, it can transform itself into a TFTP server. As such, the number of TFTP servers that are available to the network 10 grows over time.

Each phone is provided with two IP addresses. The first IP address is the central TFTP server IP address. The second IP address is used to allow the phones to communicate with one another and may be either a multicast group address or a broadcast address. The TFTP sessions between the phones and the central TFTP server are unicast. Similarly, the TFTP sessions between the phones and a phone that has transformed itself into a TFTP server are also unicast. The phones only use multicasts or broadcasts to communicate server status with one another.

The phones determine that the distributed TFTP method is being used by the network 10 from the DHCP options or from manual entry, i.e. because there are two TFTP IP addresses. The phones know that they are to attempt the distributed TFTP method if one of the TFTP addresses provided to them is a multicast or broadcast IP address. Such addresses can be identified because they fall in the range of 224.0.0.0 to 239.255.255.255. If the phones detect a TFTP IP address in this range, they determine that the distributed TFTP method is being used.

In the distributed TFTP method, each phone institutes a random back off prior to attempting TFTP. All phones must observe and complete a random back off before attempting to initiate a TFTP session.

When a phone completes a TFTP download, it transmits a "TFTP Server Ready" message using the designated communication protocol dictated by DHCP or manual entry. The information that is transmitted with the "TFTP Server Ready" message includes: set type, filename available, file revision number, phone IP address and phone MAC address. Each time a phone in a random back off state reads a "TFTP Server Ready" message with a corresponding set type and filename, it adds the TFTP server to its TFTP server list. Each new TFTP server is added to the top of the list. The central TFTP server, which the phone discovers via DHCP or manual entry, remains at the bottom of the list.

When searching for a TFTP server, phones start at the top of their TFTP server list and continue down the list until an available TFTP server is found. In some embodiments, phones that are in TFTP server mode service five TFTP sessions, either sequentially or concurrently. In these embodiments, additional TFTP session requests are answered with a TFTP error message. If a phone is rejected, the phone then attempts a TFTP session with the next TFTP server on its TFTP server list. Phones that are in TFTP server mode resume normal operation if they have completed five TFTP session requests or if they have completed less than 5 TFTP session requests and more than 10 seconds has elapsed since their last TFTP session request. Once a phone has resumed normal operation, further TFTP requests from other phones are denied. In other embodiments, phones that are in TFTP server mode may service more or less than five TFTP sessions.

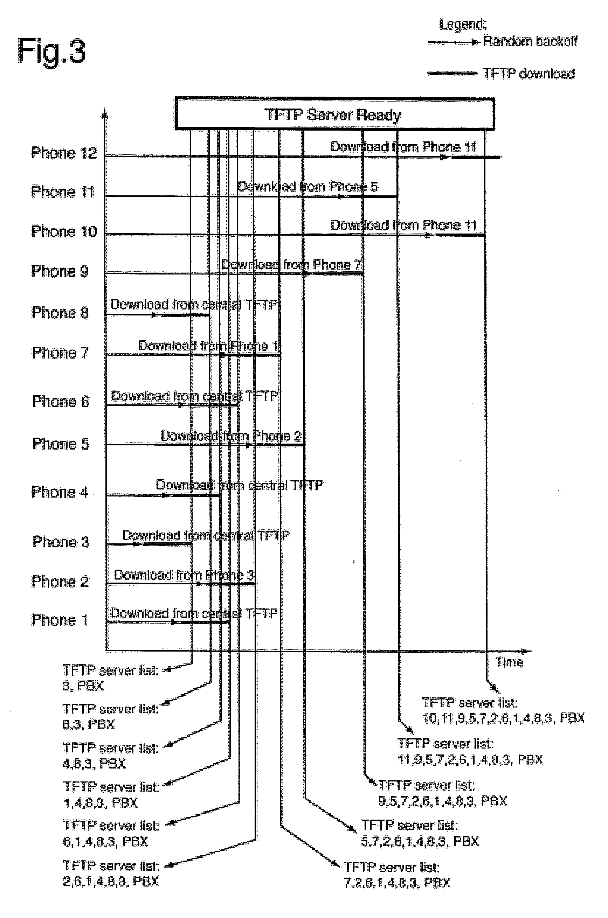

Figure 3 shows a chart of a distributed TFTP phone scheme. As shown, the phone with the shortest random back off (phone 3 in Figure 3) is generally the first to initiate and complete a TFTP session with the central TFTP server. For phone 3, the sequence of events is as follows. Initially, phone 3's TFTP server list is populated by a single IP address, the central TFTP server. Phone 3 then initiates a TFTP session with the central TFTP server. Once the TFTP session is complete, phone 3 sends the "TFTP Server Ready" message to the local area network. Other phones that are just completing their random back off and require the same software filename, add the new TFTP server (phone 3) to the top of the their TFTP server list. The other phones then initiate TFTP sessions with the new TFTP server.

In the scenario depicted in Figure 3, phone 3 downloads software to a single phone (phone 2) rather than the maximum permitted 5 phones. This is because by the time the next phone (phone 7) requests a TFTP session, additional phones (phone 8 and phone 4) have completed their TFTP sessions and been added to the top of the available server list. Therefore, following the software download to phone 2, phone 3 resumes normal operation and denies further TFTP requests from other phones 10 seconds after the TFTP session request from phone 2.

In another embodiment, one or more of the phones 1-12 are used to download software for other IP phones or to download the software to devices other than IP phones, such as personal digital assistants (PDAs), faxes and printers, for example. In order to download software to devices other than IP phones, the phones are programmed to download binaries meant for other devices. The phones 1-12 would have to modify the information in their broadcasts accordingly.

Hence, a phone (i.e. a communication device) in Figures 1 to 3 may be configured to maintain a list of other communication devices from which the communication device can download configuration information. If it finds a communication device with configuration information, it will download this information and then make itself available for dispensing this information to other communication devices which have its identity on their list. In operation, this acts as a cascade: one central communication device can be supplied with configuration information. This information is dispersed to communication devices that have the central communication device on their list and consequently other devices can obtain the configuration information from these devices as well. Configuration information spreads out from the central communication device in a cascade of communication devices.

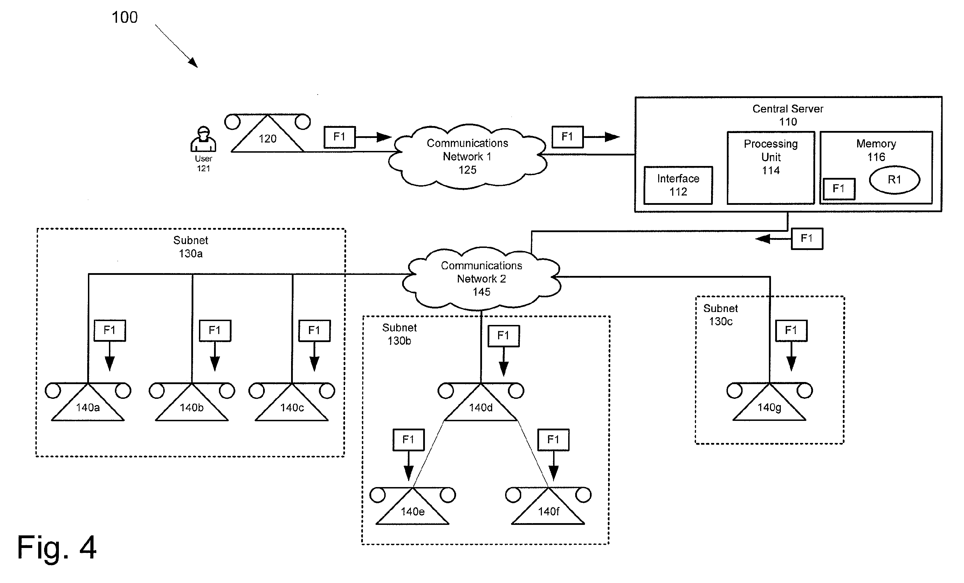

Attention is now directed to Figure 4 which depicts a system 100 for playing multi-media data on a plurality of communication devices, according to a non-limiting embodiment. In some embodiments, the system 100 comprises a network based architecture of the system of Figures 1. A central server 110 (e.g. the central TFTP server of Figure 1), is in communication with an attendant device 120 (which in some embodiments is associated with a user 121), via a first communications network 125. The central server 110 is in further communication with at least one subnet 130a, 130b and/or 130c (collectively subnets 130 and generically a subnet 130) of communication devices 140a, 140b, 140c, etc. (collectively communication devices 140 and generically a communication device 140), for example the phones of Figure 1. In some embodiments, the central server 110 is in communication with the subnets 130 via a second communication network 145 (as depicted), while in other embodiments, the central server 110 is in communication with the subnets 130 via the first communication network 125.

In some embodiments, the attendant device 120 is generally enabled to transmit multi-media data to the central server 110 via the first communication network 125. In some embodiments, the multi-media data comprises a multi-media data file F1. The central server 110 is generally enabled to distribute the multi-media data file F1 to the plurality of communication devices 140, via the second communication network 145, the multi-media data file F1 playable by each of the plurality of communication devices 140. The central server 110 is further enabled to trigger playing of the multi-media data file F1 at each communication device 140, as described below.

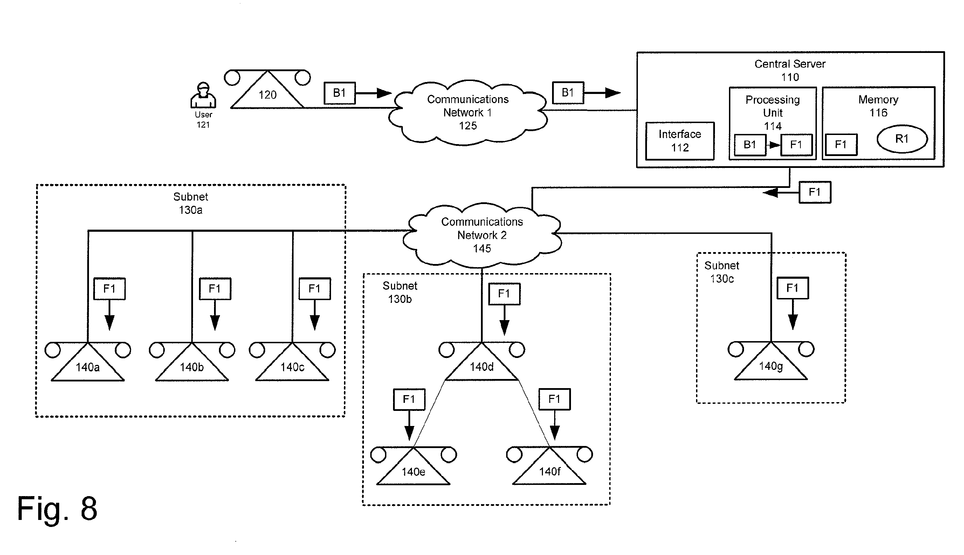

In other embodiments, as in Figure 8 (substantially similar to Figure 4 with like elements depicted with like numbers), the multi-media data comprises broadcast multi-media data B1, for example streaming multi-media data and/or a modulated electrical signal (e.g. an audio and/or video transmission) convertible to a multi-media data file F1. In these embodiments, the attendant device 120 is generally enabled to broadcast the multi-media data B1 to the central server 110, and the central server 110 is enabled to convert the broadcast multi-media data B1 to the multi-media data file F1.

The first communications network 125 comprises any network enabled to transmit multi-media data, including but not limited to a packet based network, such as the internet, a switched network, such as the PSTN, a LAN (local area network), a WAN (wide area network), a wireless and/or wireless network. Similarly, the second communications network 145 is any suitable network enabled to transmit multimedia data, including but not limited to a packet based network, such as the internet, a switched network, such as the PSTN, a LAN, a WAN, a wireless and/or wireless network.

In a particular non-limiting embodiment, the first communications network 125 comprises a LAN/WAN, and the second communications network 145 comprises a LAN/WAN. In these embodiments, the subnet 130a comprises the communication devices 140a, 140b and 140c, the subnet 130b comprises the communication devices 140d, 140e and 140f, and the subnet 130c comprises the communication device 140g. In one non-limiting embodiment, each subnet 130 may be served by a unique router port. In some embodiments, one communication device 140 on each subnet 130 may be provisioned with the address of the central server 110, with each communication device 140 in a given subnet 130 grouped as a page group member. The remaining devices on the subnet 130 that are to be configured for distributing multi-media data will have a list of the local addresses of the other communication devices in the subnet 130, so that a cascade can be triggered when the page group members receive their configuration.

In the depicted non-limiting embodiment, all of the communication devices 140 of the subnet 130a are in communication with the central server 110. However the communication device 140d of the subnet 130b is enabled to further distribute/cascade data to the communication devices 140e and 140f; for example, as for phones 1, 2, 3 and 5 of Figure 2 described above, the communication device 140d may have been transformed into a TFTP server in order to service other communication devices 140 in the subnet 130b. In other embodiments, a subnet 130 of communication devices 140 may comprise any suitable configuration, including but not limited to the configuration of Figure 2, in which some communication devices 140 are configured to distribute/cascade data, while other communication devices 140 are configured to receive data, but not distribute/cascade data.

The central server 110 generally comprises a computing device having a communications interface 112 enabled for communication via the first communications network 125 and/or the second communications network 145, and a processing unit 114 enabled for processing data. The central server 110 further comprises a memory 116 for storing data, such as the multi-media data file F1, and the local addresses of the communication devices 140, the local addresses of the communication devices 140 stored in a record R1. In the case of subnet 130b, only the local address of the communication device 140d may be stored in the memory 116, as the communication device 140d is enabled to distribute data to the other communication devices 140 in the subnet 130b.

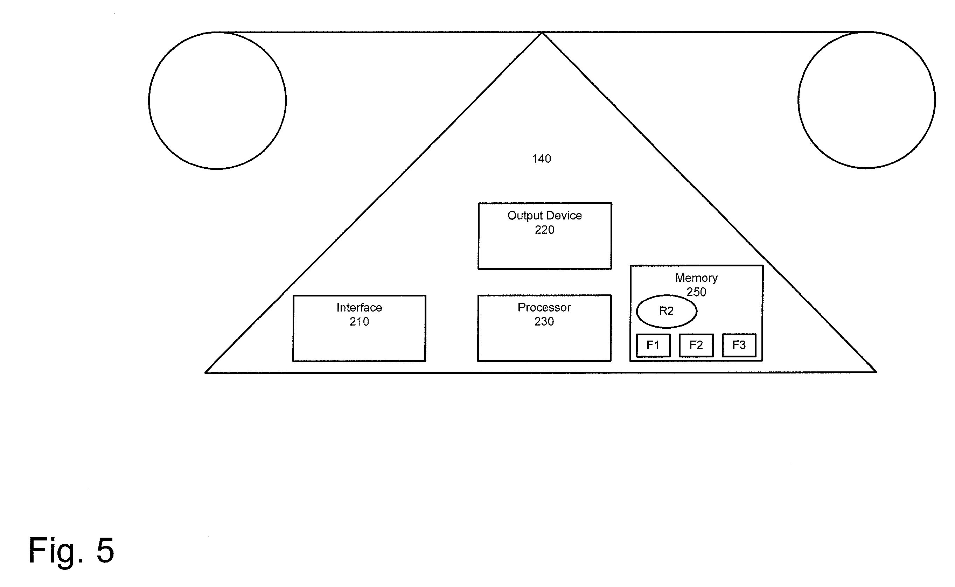

Figure 5 depicts a non-limiting embodiment of a communication device 140. The communication device 140 comprises a communications interface 210 enabled to communicate with the central server 110 (for example via a communication network such as the first communication network 125 and/or the second communication network and 145), and/or other communication devices 140 in a subnet 130, to receive and/or distribute multimedia data. In particular, the communications interface 210 is enabled to receive multi-media data, such as multi-media data file F1. The computing device 140 further comprises an output device 220 and a processing unit 220 for processing multi-media data. The processing unit 220 is generally interconnected with the communications interface 210 and the output device 230.

In some embodiments, the communication device 140 further comprises a memory 240 for storing multi-media data, such as multi-media data files F1, F2, F3, etc. , the processing unit 220 further interconnected with the memory 240. In some embodiments, each multi-media data file F1, F2, F3, etc. stored in the memory 240 is received via the central server 110 as described below. However, in other embodiments, multi-media data files F1, F2, F3, etc. may be pre-provisioned at each communication device 140 prior to being deployed in the system 100. In yet further embodiments, some multi-media data files F1, F2, F3, etc. may be received via the central server 110, while yet other multi-media data files F1, F2, F3, etc. may be pre-provisioned at each communication device 140 prior to being deployed in the system 100. In some embodiments, the memory 250 comprises a record R2 comprising the local address or addresses of other communication devices 140 within the subnet 130 to which the communication device 140 is to distribute/cascade data.

The processing unit 220 is generally enabled to control the output device 230 to generate a representation of the multi-media data upon processing multi-media data. For example, in some embodiments the output device 230 comprises an audio output device (e.g. a speaker and the like), a video output device (e.g. a display such as a flat panel display (e.g. LCD and the like)) or a combination. The multi-media data may comprise audio data, video data or a combination. Hence, upon processing the multi-media data, the processing unit 220 controls the output device 230 to generate a representation of the audio data and/or video data. In other words, the communications device 140 is generally enabled to play multi-media files. For example, the communication device 140 may be generally provisioned with a multimedia player application for playing audio and or video files, such as an MP3 player and/or an MP4 player.

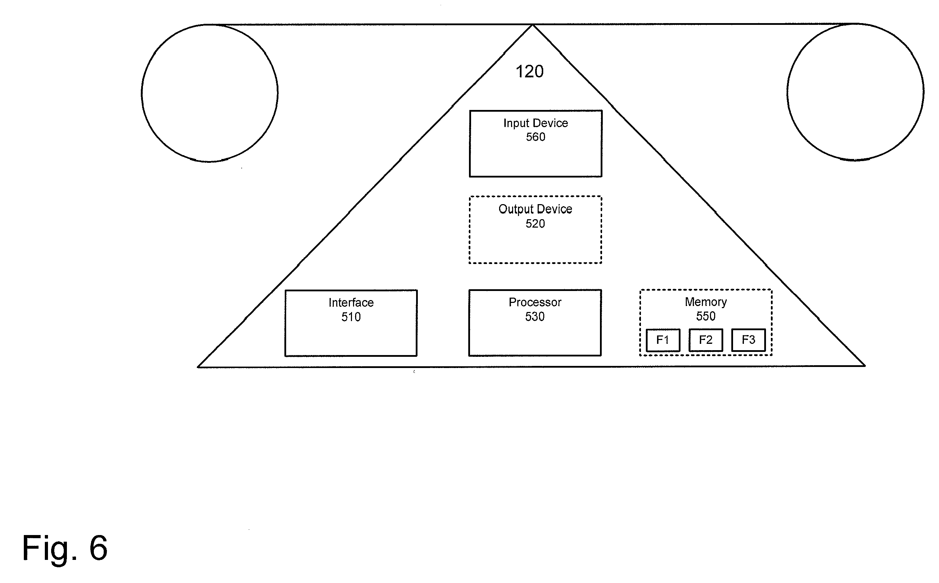

Figure 6 depicts a non-limiting embodiment of the attendant device 120. The attendant device 120 is generally similar to the communication device 140, and comprises a communications interface 510 similar to the communications interface 210, and a processing unit 530 similar to the processing unit 230. Some embodiments of the attendant device 120 further comprise an output device 520 and/or a memory 550 similar to the output device 220 and the memory 250 respectively. In some of these embodiments, the memory 550 may store multi-media data files F1, F2, F3 etc. In some embodiments, the multi-media data files F1, F2, F3 etc. may be created and stored at the attendant device 120 via a user inter action with the attendant device 120, as described below. In other embodiments, the multi-media data files F1, F2, F3 etc. may be pre-provisioned at the attendant device 120.

In some embodiments, the attendant device 120 further comprises an input device 560 which enables the attendant device 120 to receive input data, and specifically multi-media input data, from the user 121. For example, the input device 120 may comprise an audio input device (e.g. a microphone) and/or a video input device (e.g. a camera) which captures audio and/or video input data from the user 121. The processing unit 530 is enabled to process the multi-media input data, converting the multi-media input data to multi-media data F1 for transmission to the central server 110. In some embodiments, the multi-media data file F1 is then stored in the memory 550.

In some embodiments, the attendant device 120 is enabled to transmit a multi-media data file F1, F2, F3 etc. to the central server 110, upon receipt of a trigger, for example from the user 121 and/or from computing device (not depicted), with which the attendant device 120 is in communication. For example, the user 121 may interact with the input device, which in these embodiments may comprise a keyboard, a mouse, a touchscreen associated with the output device 520 etc., to choose one or more multi-media data files F1, F2, F3 etc. for transmission to the central server 110.

In some embodiments, the attendant device 120 comprises an element of a public announcement system.

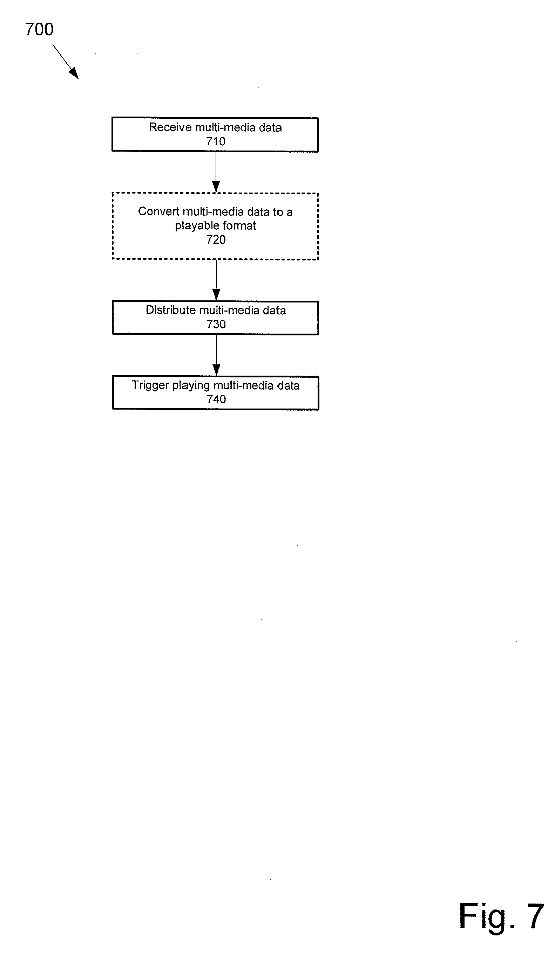

Attention is now directed to Figure 7, which depicts a method 700 of playing multi-media data on the plurality of communication devices 140, according to a non-limiting embodiment. In order to assist in the explanation of the method 700, it will be assumed that the method 700 is performed using the system 100. Furthermore, the following discussion of the method 700 will lead to a further understanding of the system 100 and its various components. However, it is to be understood that the system 100 and/or the method 700 can be varied, and need not work exactly as discussed herein in conjunction with each other, and that such variations are within the scope of present embodiments.

At step 710, multi-media data is received at the central server 110 from the attendant device 120. For example, in one embodiment, the attendant device 120 may transmit multi-media data to the central server 110 via the first communication network 125 upon receipt of multi-media input data at the input device 560. In some embodiments, the multi-media data comprises the multi-media data file F1 generated at the attendant device 120, as in Figure 4. Hence, the attendant device 120 captures multi-media input data, converts the multi-media input data to the multi-media data file F1, and transmits the multi-media data file F1 to the central server 110. However, in other embodiments, the attendant device 120 may transmit a multi-media data file F1 stored in the memory 550, upon receipt of a trigger from the user 121 and/or a computing device.

In one non-limiting embodiment, the multi-media data file F1 comprises an announcement and/or paging message, such as "It is 5pm, the store is closing". In another non-limiting embodiment, the multi-media data file F1 comprises a non-customized emergency page, such "There is a fire, please exit the building". In another non-limiting embodiment, the multi-media data file F1 comprises a customized emergency page, such "There is a fire on the east side of the fourth floor, please exit the building via fire exits on the west side of the building". In yet another non-limiting embodiment, the multi-media data file may comprise background music playable at a communication device 140, for example when a communication device 140 is placed in a hold state, as described below. Other types of multi-media data files F1 are within the scope of the present specification.

In other embodiments, the multi-media data comprises broadcast multi-media data B1, as in Figure 8. For example, in these embodiments, the user 121 may interact with the input device 560 at the attendant device 120, the attendant device 120 subsequently converting multi-media input data to broadcast multi-media data B1, and broadcasting the broadcast multi-media data B1 to the central server 110. For example, the user 121 may speak into a microphone at the attendant device 120 with the intention of paging the communication devices 140. In non-limiting embodiments, the multi-media data B1 may comprise any multi-media data to be played at the communication devices 140, such as announcements, pages, emergency pages, customized emergency pages and/or background music. In some of these embodiments, the multi-media data B1 may comprise streaming data.

In some embodiments, at step 720, the multi-media data is converted to a format playable on the communication devices 140. For example, as in Figure 8, the broadcast multi-media data B1 may be converted to the multi-media data file F1 at the central server 110. In some of these embodiments, the central server 110 is further enabled to record the broadcast multi-media data B1, if necessary, prior to converting the broadcast multi-media data B1 to the multi-media data file F1. In yet further embodiments, the central server 110 may be enabled to distribute the broadcast multi-media data B1 to the communication devices 140, as described with reference to step 730, the conversion occurring at a communication device 140, as required. However, in other embodiments, a multi-media data file F1 received at the central server 110 may not be in a format playable by the communication devices 140, and the central server 110 is enabled to convert the multi-media data file F1 to a playable format by processing the multi-media data file F1. In some embodiments, the conversion may occur at each individual communication device 140, as required, for example upon receipt of the multi-media data file F1.

At step 730, the central server 110 distributes the multi-media data to the communication devices 140. For example, the central server 110 consults the record R1 to determine local addresses of each of the plurality of communication devices 140 and transmits the multi-media data to each of the local addresses. With regard to subnet 130a, the central server 110 distributes the multi-media data to each of the communication devices 140a, 140b and 140c. With regard to subnet 130b, the central server 110 distributes the multi-media data to the communication devices 140d, the communication device 140d further distributing the multi-media data to the communication devices 140e and 140f. Hence, in these embodiments, no one server/communication device 140 is responsible for providing information to all communication devices, which addresses the issue of limited processing capacity.

Alternatively, the communication devices 140 may request the multi-media data, as in figures 2 and 3, the communication devices 140 having been made aware of available files via a "TFTP Server Ready" message, described above.

At step 740, the central server 110 may trigger playing of the multi-media data at the plurality of communication devices 140. In some embodiments, step 730 and step 740 may be combined, such that the central server 110 triggers playing of the multi-media data at the plurality of communication devices 140 by virtue of distributing the multi-media data to the communication devices 140. In other words, the multi-media data itself may comprise the trigger and each communication device 140 is enabled to play the multi-media data upon receipt. In other embodiments, the central server 110 may transmit a trigger concurrent with distributing the multi-media data, such that the communication devices 140 play the multi-media data upon receipt. In this manner, the multi-media data is played at the communication devices 140 without using excessive bandwidth in the first communication network 125. For example, bandwidth limitations are often critical on WAN access links to the central server 110. Hence, the method 700 relieves strain on WAN (i.e. first communication network 125) bandwidth and utilizes the large bandwidth often supplied on a local LAN (i.e. second communication network 145).

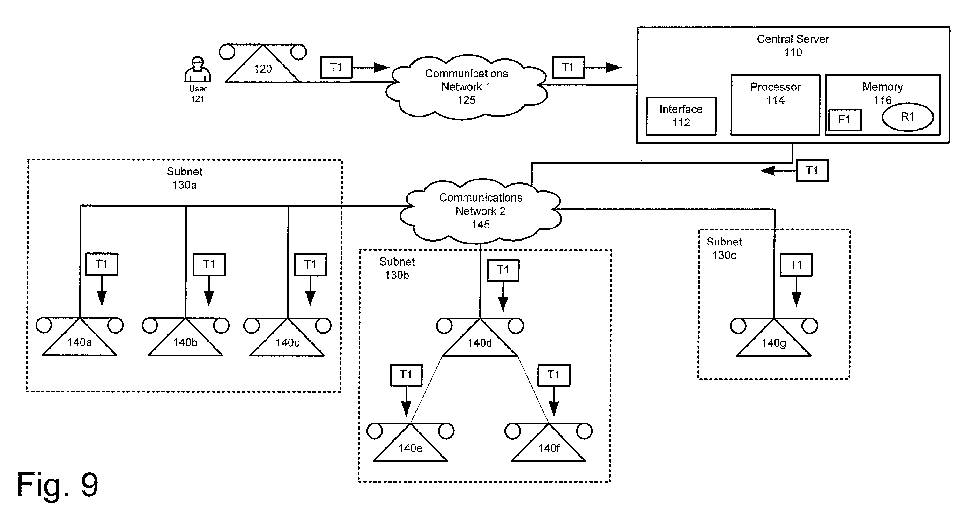

In yet further embodiments, as depicted in Figure 9 (substantially similar to Figure 4, with like elements depicted with like numbers), the central server 110 may receive a trigger T1 from the attendant device 120, the trigger T1 indicative of which multi-media data should be played at the communication devices 140. For example, in these embodiments, the communication devices 140 may be pre-provisioned with multi-media data files F1, F2, F3, etc., as in Figure 5, either via distribution via the central server 110, as in steps 710 through 730, or via a provisioning step that occurs for each communication device 140 prior to being provided to the system 100. The user 121 may then select which multi-media data is to be played by interacting with the input device 560 at the attendant device 120, which then transmits the trigger T1 to the central server 110, which subsequently distributes the trigger T1 (or another trigger: in some embodiments, the central server 110 creates a new trigger by processing the trigger T1) to the communication devices 140 in a manner similar to the distribution of the multi-media data described with reference to step 730. In this manner, the multi-media data is played at the communication devices 140 without using excessive bandwidth in the first communication network 125, and by pre-provisioning the communication devices 140 with multi-media files F1, F2, F3, etc. In addition, the user 121 may conveniently trigger a paging/announcement feature at the communication devices 140 using the distributed resources of the communication devices 140 without using excessive resources of the first communication network 125, the attendant device 120 or the central server 110.

For example, when a user reports an emergency to an attendant, such as the user 121, in some embodiments, the attendant can signal the central server 110 via the attendant device 120 to configure all communication devices 140 for the mass broadcast of an emergency announcement. The page group devices on each subnet 130 will obtain multi-media data either by receiving it or requesting it from the central server 110, and subsequently the multi-media data will cascade to all appropriate communication devices 140 on each subnet 130, for example as with communication device 140d in subnet 130b, and phones 1, 2 ,3 and 5 of Figure 2: the multi-media data is transmitted to the master phones in each subnet by the central server 110, and the other phones in the subnet request the multi-media data from the master phone.

In some embodiments, for mass announcements/paging (emergency or otherwise), a communication device 140 can be enabled to play the announcement repeatedly until it is triggered to do otherwise or a specific control sequence on the communication device 140 is accomplished. Standard announcements (i.e. in the form of multi-media data files F1, F2, F3, etc.) can be configured within the communication 140 device during the standard configuration/pre-provisioning process as described above. The standard configuration will have playing the announcement turned off. In some embodiments, to trigger the playing of the announcement, the configuration of the communication device 130 will be updated, for example via a trigger from the central server 110, so that the playing of the announcement will be the default behavior of the communication device 140, until the configuration of the communication device 140 is further updated, e.g. via the receipt of another trigger.

In some embodiments, the central server 110 may trigger each of the subnets 130, however in other embodiments, the central server 110 may trigger a particular subnet 130. Hence, the central server 110 can trigger paging in a particular subnet 130; if the particular subnet 130 is associated with a particular geographic area, or part of a building, the central server 110 is hence enabled to page the particular geographic area, or part of a building by paging the particular subnet 130.

In some embodiments, a mass emergency announcement feature could be enhanced by a display, such as the output device 220, displaying a map with directions to the nearest exit.

In yet further embodiments, the central server 110 may trigger a subset of the plurality of communication devices 140, including but not limited to a particular communication device 140. For example, in some of these embodiments, a multi-media data file F1 stored at a particular communication device 140 may comprise background music. If the particular communication device 140 is engaged in a communication session (e.g. a phone call) and the communication session is placed in a hold state, the central server 110 may trigger playing of the background music at the particular communication device 140 while the particular communication device 140 is on hold, such that background music does not need to be transmitted to the particular communication device 140, hence saving bandwidth in the first communication network 125 and/or the second communication network 145. Playing of the background music can be triggered to stop once the hold state ends.

In a particular non-limiting embodiment, a given communication device 140 may be enabled to allow a user of the given communication device 140 to add, delete and manage multi-media data files comprising preferred background music to the given communication device 140, such that the given communication device 140 plays the preferred background music when a trigger is received from the central server 110 to play background music.

For a background music feature, the configuration of a communication device 140 can be set so that newly configured multi-media data files can be identified and added to a list of available local files. Thus music files can be added to the local device as needed. Similarly the device can be configured to remove a file.

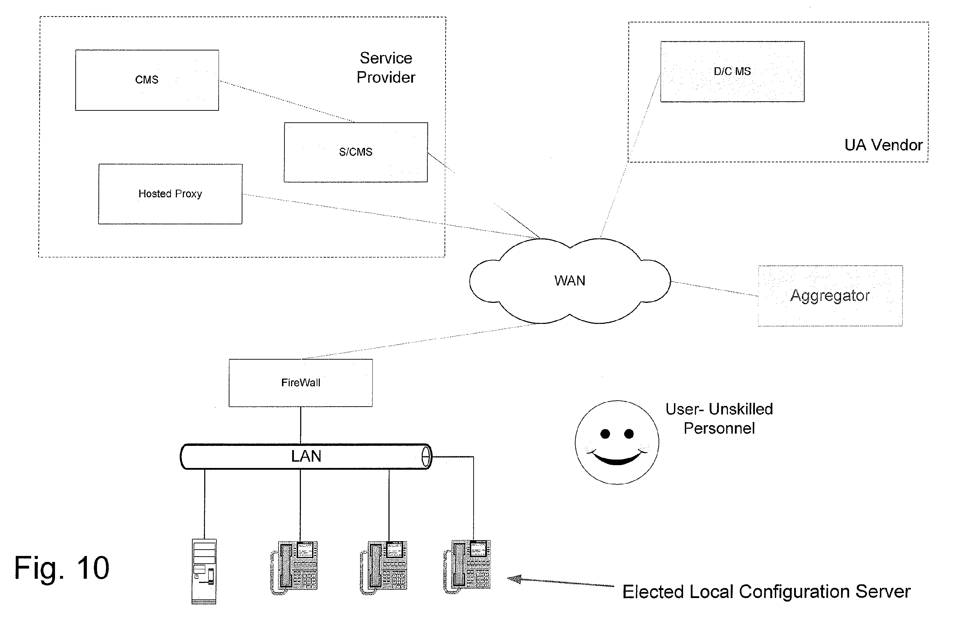

While the method 700 has been described with reference to implementation in system 100 using TFTP protocols, in other embodiments, the method 700 may be implemented within other systems using protocols other than TFTP protocols. For example Applicant's co-pending application, "CONFIGURATION OF IP TELEPHONY AND OTHER SYSTEMS ", U.S. Ser. No. 11 /774,352, filed on June 6, 2007 and incorporated herein by reference, discloses a system which addresses the issue of the configuration of devices on local networks. As depicted in Figure 10, a peer to peer (P2P) network is set up among communication devices on a network, for example a WAN. One of these communication devices is elected as a Local Configuration Server (LCS). The LCS will act as repository for the configurations of all communication devices on the network. A communication device that becomes active after being removed from the network can obtain its configuration from the LCS. A network aggregator is also taught. The aggregator is enabled to store the configurations of communication devices from multiple local networks. If a network goes down because of a local power failure or some other reason, the aggregator can supply the network with the configuration for all communication devices when it comes back online. The LCS will subscribe to the aggregator for the configuration information. The aggregator will supply the LCS with the configuration data for all communication devices and the LCS will, in turn, supply each communication device with its configuration. Hence, data may be distributed to communication devices in a manner that conserves bandwidth on the WAN.

Hence, network management systems can utilize the aggregator to manage the configurations of communication devices. An API may be supplied such that the network management system can update the configurations of individual or groups of communication devices. The updated configuration will automatically be dispersed to the local networks and devices by the actions of the aggregator. Thus for mass bandwidth features, such as announcements, paging, background music and the like, a server controlling this feature (such as the LCS) can update the configurations of all communication devices with the appropriate multi-media data file for the feature. The action of the aggregator will be to disperse this feature to all appropriate communication devices or the appropriate LCS, which in turn disperses the feature to all appropriate communication devices managed by the LCS. Hence, the method 700 may implemented within the aggregator, the LCS or a combination.

In some embodiments, a function can also be supplied in the API so that the changes can be made to multiple communication devices at the same time. Thus, a class of communication devices can be identified and the same change can be applied to each of them. This will relieve the controlling server of having to supply the aggregator with the same potentially lengthy multi-media data file multiple times.

A difference between the implementation of method 700 in the aggregator and/or the LCS and the subject matter taught in U.S. Ser. No. 11/774,352, however, is that U.S. Ser. No. 11 /774,352 teaches a "pull" architecture in which data is requested by the aggregator and/or the LCS from other elements in the network, while the method 700 represents a "push" architecture in which the aggregator and/or the LCS pushes data to the LCS and/or the communication devices, respectively.

While the method 700, and the system 100, has been described with reference to playing multi-media data on the plurality of communication devices 140, the method 700, and the system 100, may be further directed to distributing and processing data in general on the plurality of communication devices 140. For example, in some embodiments, data to be distributed may not be multi-media data, but data for processing, for example an application that is to be installed at each communication device 140, such as an update to a multi-media player application and/or a new multi-media player application. In these embodiments, the method 700 may be adapted for processing data on the plurality of communication device 140. For example, the central server 110 may be enabled to receive data via the first communication network 125, for example from the attendant device 120 or another communication device and/or computing device. The central server 110 may also be configured to distribute the data to the plurality of communication devices 140, similar to the distribution of multi-media data described with reference to step 730 of the method 700. The central server 110 may also be enabled to trigger processing of the data at, at least a subset of the plurality of communication devices, in a manner similar to triggering playing of multi-media data described with reference to step 740 of the method 700.

Further, embodiments have been described herein with reference to TFTP protocols and P2P protocols, other protocols that will occur to a person of skill in the art are within the scope of the present specification. Further the use of TFTP and P2P protocols are not to be considered unduly limiting.

Those skilled in the art will appreciate that in some embodiments, the functionality of the central server 110, the attendant device 120, and the communication devices 140 may be implemented using pre-programmed hardware or firmware elements (e.g., application specific integrated circuits (ASICs), electrically erasable programmable read-only memories (EEPROMs), etc.), or other related components. In other embodiments, the functionality of the central server 110, the attendant device 120, and the communication devices 140 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of processing data on a plurality of communication devices comprising:
receiving data at a master communication device via a master communication network;
distributing said data to a plurality of communication devices in communication with said master communication device; and
triggering processing of said data at, at least a subset of said plurality of communication devices.

2. The method of claim 1, wherein said plurality of communication devices are in communication with said master communication device via a second communication network.

3. The method of claim 1 or claim 2, wherein distributing said data to a plurality of communication devices in communication with said master communication device comprises transmitting said data to a portion of said plurality of communication devices which are designated as masters, said distributing said data to the remaining communication devices occurring via said masters.

4. The method of any preceding claim, further comprising triggering storing said data at said plurality of communication devices.

5. The method of any preceding claim, wherein said data comprises multimedia data, and said triggering processing of said data at, at least a subset of said plurality of communication devices comprises triggering playing of said multimedia data at, at least a subset of said plurality of communication devices.

6. The method of claim 5, further comprising converting said multi-media data to a format playable by said plurality of communication devices prior to said distributing said multi-media data.

7. The method of claim 6, wherein said multi-media data comprises voice data broadcast by a public announcement system, and further comprising recording said voice data prior to said converting said multi-media data to a format playable by said plurality of communication devices.

8. The method of claim 6, wherein said multi-media data comprises streaming data, and further comprising capturing said streaming data prior to said converting said multi-media data to a format playable by said plurality of communication devices.

9. The method of any of claims 5 to 8, wherein each of said plurality of communication devices is enabled to store and delete multi-media data files.

10. The method of any of claims 5 to 9, wherein said triggering playing of said multi-media data at said at, at least a subset of said plurality of communication devices occurs via said distributing said multi-media data to a plurality of communication devices, and optionally wherein said playing of said multi-media data at said at least a subset of said plurality of communication devices occurs upon receipt of said multi-media data at said plurality of communication devices.

11. The method of claim 5 to 10, wherein said triggering playing of said multi-media data at said at least a subset of said plurality of communication devices comprises triggering changing of the default behaviour of the subset of said plurality of communication devices by updating the configuration of said at least a subset of said plurality of communication devices

12. The method of any of claims 5 to 11, wherein a plurality of multi-media data is stored at said plurality of communication devices, and said triggering playing of said multi-media data comprises transmitting a signal comprising an identifier of said multi-media data to said at least a subset of said plurality of communication devices.

13. The method of any of claims 5 to 12, wherein said multi-media data comprises at least one of an announcement, a page, and background music, or comprises an announcement and a map, or comprises at least one of an audio file and a video file in a format playable by said plurality of communication devices.

14. A master communication device comprising,
a communications interface enabled for receiving data via a master communication network; and
a processing unit enabled for:
distributing said data to a plurality of communication devices in communication with the master communication device; and
triggering processing of said data at, at least a subset of said plurality of communication devices.

15. A method of playing multi-media data on a plurality of communication devices comprising:
providing the plurality of communication devices, each of which has been provisioned with at least one multi-media data file, the plurality of communication devices in local communication with a central communication device, the central communication device in remote communication with an attendant device; and
at the central communication device:
receiving a trigger to play the at least one multi-media data file from the attendant device; and
in response, transmitting a trigger to the plurality of communication devices to play the at least one multi-media data file.
